Europäisches Patentamt

European Patent Office

Office européen des brevets

(19)

(11) Veröffentlichungsnummer: **0 191 149**
**B1**

(12)

# EUROPÄISCHE PATENTSCHRIFT

(45) Veröffentlichungstag der Patentschrift: **08.08.90**

(21) Anmeldenummer: **85114575.5**

(22) Anmeldetag: **16.11.85**

(51) Int. Cl.⁵: **H 04 N 5/76**

(54) Verfahren zur automatischen Aufzeichnung von Fernsehprogrammen nach Auswahl aus Videotext-Programmtafeln.

(30) Priorität: **14.02.85 DE 3505006**

(43) Veröffentlichungstag der Anmeldung:
**20.08.86 Patentblatt 86/34**

(45) Bekanntmachung des Hinweises auf die
Patenterteilung:
**08.08.90 Patentblatt 90/32**

(84) Benannte Vertragsstaaten:
**AT CH DE FR GB LI**

(56) Entgegenhaltungen:
**GB-A-2 126 002**

**RUNDFUNKTECHNISCHE MITTEILUNGEN,
Band 26, Nr. 6, November/Dezember 1982,
Seiten 254-257, Nordersted; G. HOFMANN et
al.: "Videotext programmiert Videorecorder"**

(73) Patentinhaber: **GRUNDIG E.M.V. Elektro-
Mechanische Versuchsanstalt Max Grundig
holländ. Stiftung & Co. KG.
Kurgartenstrasse 37
D-8510 Fürth/Bay. (DE)**

(72) Erfinder: **Hegendörfer, Max, Dipl.-Ing.
Pautzfelder Strasse 31
D-8550 Forchheim (DE)**

Courier Press, Leamington Spa, England.

## Beschreibung

Die Erfindung betrifft ein Verfahren zur automatischen aufzeichnung von Fernseh-Programmbeiträgen mit einem Videoaufzeichnungsgerät, wobei die Auswahl der aufzuzeichnenden Programmbeiträge in besonders vorteilhafter Weise mit Hilfe der über den Videotext-Dienst angebotenen Programmtafeln geschieht.

Unter dem Namen Videotext ist in der Bundesrepublik Deutschland ein Informationssystem eingeführt, bei dem in bestimmten Datenzeilen innerhalb der Vertikalaustastlücke des Fernsehsignals neben der laufenden Videoinformation Datenblöcke übertragen werden, die empfängerseitig mit Hilfe eines geeigneten Decoders in mehrfarbige alphanumerische Zeichen und auch Grafiken umgewandelt werden, die auf dem Fernsehbildschirm als Tafeln mit verschiedenartigem Inhalt dargestellt werden.

Die Tafeln werden als Datenblöcke sequentiell in der Vertikalaustastlücke übertragen und in einem dem empfängerseitigen Decoder zugeordneten peicher abgelegt, so daß nach freier Wahl die unterbrechungsfreie Wiedergabe einer bestimmten Tafel möglich ist. Eine ausführlichere Beschreibund des Videotext-Systems in der Bundesrepublik, Deutschland findet sich in "Fernseh- und Kino-Technik" Nr. 5/1984, Seite 179 bis 185 und "Rundfunktechnische Mitteilungen" Heft 3, 1983, Seite 116 bis 134.

Ein wichtiger Bestandteil des Videotext-Informationsdienstes ist die Bereitstellung von Programmtafeln, aus denen die Programmbeiträge der verschiedenen Fernsehanstalten für einen bestimmten Zeitraum entnehmbar sind.

Bei einem neuen System, das "Videotext programmiert Videorecorder" (VPV) genannt wird, enthalten die Programmtafeln zusätzlich zu den Daten, die für die Wiedergabe der alphanumerischen Schriftzeichen auf dem Fernsehbildschirm notwendig sind, weitere auf dem Fernsehbildschirm unsichtbare Daten, mit denen der Programmbeitrag und dessen vorgeshener Beginn sowie Ende erkannt werden können.

Ein weiteres System wird "Video-Programm-Service" (VPS) genannt. Bei diesem System sollen die von den Fernsehanstalten ausgestrahlen Programmbeiträge mit einer Datenkennung versehen werden, die ebenfalls den Programmbeitrag, den Beginn und das Ende kennzeichnet. Dür diese Datenkennung ist eine bestimmte Datenzeile während der Vertikalaustastlücke des Fernsehsignals vorgesehen. Durch Vergleich dieser Datenkennung mit den gespeicherten Programmdaten kann die automatische Aufzeichnung gestartet werden.

Alternativ besteht auch die Möglichkeit, diese zusätzliche Datenkennung in den Videotext-Datenzeilen unterzubringen, die auch die Daten für die Programmtafeltafeln enthalten. Die Videotextdaten bestimmter Programmtafeln nach dem vorher beschriebenen VPV-System enthalten dann eine zusätzliche Datenkennung, über die der gerade gesendete Programmbeitrag identifizierbar ist. Daher kann auch über die innerhalb des Videotextsignals enthaltenen verdeckten, also nicht auf dem Bildschirm darstellbaren Daten die automatische Aufzeichnung gestartet werden.

Diese zusätzliche Information kann in den am häufigsten verfügbaren Tafeln (Übersichtstafeln) programmspezifisch angeboten werden. Mit dieser zusätzlichen Information ist also der empfangsseitige Decoder imstande, nach Maßgabe empfangsseitig abgespeicherter Daten bestimmte Programmbeiträge und ihre Sendezeit zu erkennen.

Aus der Zeitschrift "Rundfunktechn. Mitteilungen", H.6, 1982, S. 254—257, ist bereits ein Verfahren zur Programmierung von Videorecordern nach Auswahl aus Videotext-Programmtafeln bekannt. Bei diesem bekannten Verfahren wird mittels einer Programmiertastatur eine Videotextseite angewählt, welche Daten für eine Programmvorschautafel enthält. Diese Daten werden in einem im Fernsehempfänger angeordneten Videotextdecoder decodiert und in Form der Programmvorschautafel auf dem Bildschirm des Fernsehempfängers dargestellt. Aus dieser Programmvorschautafel wählt der Benutzer durch wiederholtes Betätigen einer Taste "Sendung anwählen" einen gewünschten Programmbeitrag an. Nach Betätigung einer Taste "Sendung programmieren" werden aus der genannten Videotextseite die zur automatischen Aufzeichnung des Programmbeitrages notwendigen Daten (Sendedatum, Anfangs- und Endzeit der Sendung, Bezeichnung der Rundfunkanstalt) entnommen und im Programmspeicher des Videorecorders abgelegt. Dieses Ablegen wird dem Benutzer durch Einblendung einer Kommentarzeile auf dem Bildschirm des Fernsehempfängers bestätigt.

Weiterhin ist es aus der Patentanmeldung GB—A—2126002 bekannt, im Rahmen eines Videorecorder-Programmiervorganges im Falle einer zeitlichen Überschneidung zweier aufzuzeichnenden Sendungen einer der Sendungen eine höhere Priorität zu geben als der anderen. Bei der späteren Aufzeichnung wird folglich die Sendung mit der höheren Priorität komplett und die Sendung mit der niedrigen Priorität unvollständig aufgezeichnet. Ferner ist es aus der genannten Paentanmeldung bekannt, den Benutzer durch Auslösung eines optischen oder akustischen Alarmsignals auf den Beginn einer aufzuzeichnenden Sendung aufmerksam zu machen, wenn sich der Videorecorder gerade in der Wiedergabebetriebsart befindet.

Der Erfindung liegt die Aufgabe zugrunde, auf der Basis der beschriebenen Systeme VPV und VPS ein neues vorteilhaftes Verfahren zur automatischen Aufzeichnung von Fernsehprogrammen zu schaffen, das die Programmierung des Speichers im Aufzeichnungsgerat in besonders einfacher und benutzerfreundlicher Art erlaubt.

Diese Aufgabe wird bei einem Verfahren mit den im Oberbegriff des Anspruchs 1 angegebenen Merkmalen durch die im kennzeichnenden Teil des Anspruchs 1 angegebenen Merkmale gelöst.

Der Videotextdecoder ist nach dem bekannten Stand der Technik im Fernsehempfänger eingebaut. Erfindungsgemäß wird der Videotextdecoder im Aufzeichnungsgerät eingebaut oder dem Aufzeichnungsgerät beigestellt. Dadurch ergibt sich der Vorteil, daß die Aufbereitung der Programmtafeln und die Abspeicherung der für die automatische Aufzeichnung notwendigen Daten im Videoaufzeichnungsgerät mit besonders geringem Aufwand durchgeführt werden kann. Trotzdem ist über die Bedieneinrichtung des Aufzeichnungsgerätes, die auch als Fernbedienung ausgeführt sein kann, der Aufruf jeder beliebigen Videotexttafel möglich. Da auch der Signalgenerator, der die decodierten Videotextdaten in Videosignale umwandelt, im Aufzeichnungsgerät eingebaut oder dem Aufzeichnungsgerät beigestellt ist, kann über den ohnehin an den zugeordneten Fernsehempfänger angeschlossenen Ausgang des Aufzeichnungsgerätes dem Fernsehempfänger das der gewählten Videotexttafel entsprechende Videosignal zugeführt und auf dem Bildschirm dargestellt werden.

Nach Darsttellung de Programmtafel auf dem Fernsehlbildschirm werden dann die einzelnen Programmbeiträge durch eine erste elektro-optische Markierung, beispielsweise durch Blinken, durch einen Cursor oder durch eine bestimmte Farbgebung (manuell gesteuert oder automatisch) zeitlich nacheinander angeboten. Die elektro-optische Markierung wandert manuell ausgelöst oder automatisch über alle Einzelbeiträge der Programmtafeln und bietet somit in zeitlicher Aufeinanderfolge alle Einzelpositionen der Programmtafeln zur Auswahl an. Durch die manuelle Auslösung einer Speicherfunktion wird dabei der jeweils für die automatische Aufzeichnung gewünschte Programmbeitrag ausgewählt und mit allen für die Aufzeichnung erforderlichen Daten im Speicher des Aufzeichnungsgerätes abgelegt. Bei Programmbeiträgen, deren automatische Aufzeichnung nicht gewünscht wird, unterbleibt die manuelle Auslösung der Speicherfunktion, die elektro-optische Markierung auf dem Bildschirm wandert dann manuell ausgelöst oder automatisch zum nächsten Programmbeitrag und bietet diesen dem Gerätebenutzer an. Wird für einen angebotenen Programmbeitrag die Speicherfunktion ausgelöst und erfolgt dadurch die Abspeicherung des Programmbeitrages, dann wird dies durch eine zweite elektro-optische Markierung, beispielsweise eine besondere Schriftfarbe, auf dem Bildschirm angezeigt. Damit wird für den Benutzer die Abspeicherung des betreffenden Programmbeitrags für automatische Aufzeichnung quittiert.

Entsprechend den Unteransprüchen des erfindungsgemäßen Verfahrens werden nach Abschluß der Auswahl der Programmbeiträge, die aufgezeichnet werden sollen, nur diese in zeitlicher Reihenfolge zusammengefaßt, auf dem Bildschirm aufgelistet und elektro-optisch vorzugsweise ebenso wie bei der Auswahl der Programmbeiträge markiert, so daß eine deutliche Unterscheidung gegenüber den ursprünglichen Videotext-Programmtafeln gegeben ist. Diese elektro-optische Markierung kann vorteilhaft auch für die Wiedergabe der ursprünglichen Videotext-Programmtafeln übernommen werden, so daß bei deren Aufruf die für die automatische Aufzeichnung aus dem Gesamtprogramm bereits gewählten Programmbeiträge erkennbar sind. Da die für die automatische Aufzeichnung ausgewählten Programmbeiträge von verschiedenen Sendeanstalten stammen können, beseht die Möglichkeit der zeitlichen Kollision. Erfindungsgemäß werden deshalb die kollidierenden Programmbeiträge in de Tafel der ausgewählten Programmbeiträge durch eine wechselnde elektro-optische Markierung, beispielsweise durch Wechselblinken, kenntlich gemacht. Durch Auslösung einer Bestätigungsfunktion kann der Benutzer erfindungsgemäß dann die Priorität setzen, welcher Programmbeitrag primär und volständig aufgezeichnet werden soll und welcher Beitrag gekürzt oder garnicht aufgezeichnet werden soll. Wenn nach dieser Prozedur alle zeitlichen Kollisionen ausgeräumt sind, werden auf dem Bildschirm diejenigen, für die automatische Aufzeichnung ausgewählten Programmbeiträge elektro-optisch, beispielsweise durch Blinken ode besondere Schriftfarber, markiert, die über die Aufzeichnungskapazität der in das Aufzeichnungsgerät eingelegten Kassette hinausgehen. Schließlich wird dann noch auf dem Bildshirm angezeigt, innerhalb welche Zeitspanne oder nach welchem Programmbeitrag der Wechsel der Kassette notwendig ist. Damit der notwendige Kassettenwechsel auch ohne Bildschirmdarstellung signalisiert wird, kann im Videoaufzeichnungsgerät auch ein entsprechendes elektro-optisches oder akustisches Signal erzeugt werden, das auf den Kassettenwechsel aufmerksam macht, auch wenn der Fernsehempfänger ausgeschaltet ist.

In Weiterbildung der Erfindung werden schließlich beim Ablauf der programmierten Aufzeichnung diejenigen Daten, die den Programmbeitrag und die Sendezeit kennzeichnen, mit aufgezeichnet und bei der Wiedergabe über den ohnehin im Aufzeichnungsgerät vorhandenen Decoder mit Signalgenerator zu Beginn der Wiedergabe des jeweiligen Programmbeitrages in lesbarer Form in das Videosignal eingeblendet. Diesen Verfahrensschritt erledigt der im Videoaufzeichnungsgerät ohnehin vorhandenen Microcomputer durch Kombination der aus dem Videotext-Angebot entnommenen Daten, die der alphanumerischen Bildschirmdarstellung zuzuordnen sind, mit dem aufzuzeichnenden Videosignal. Es muß allerdungs dafür gesorgt werden, daß das Aufzeichnungsgerät diese Daten einwandfrei aufzeichnet und wiedergibt. Hierzu sind verschiedene Lösungsvorschläge bereits bekannt.

Wird das Videoaufzeichnungsgerät vor dem Abarbeiten des gespeicherten Programmes für die automatische Aufzeichnung bereits im Wiedergabebetrieb benutzt, dann ist es vorteilhaft, eine kurzfristig bevorstehende, programmierte Aufzeichnung elektro-optisch und/oder akustisch zu signalisieren, so saß der Benutzer auf die notwendige Umschaltung auf den automatischen Aufnahmebetrieb aufmerksam wird. Dieses Warnsignal kann zusätzlich in an sich bekannter Weise die Umschaltung vom Wiedergabe- in den Aufzeichnungsbetrieb und einen Suchlauf des Aufzeichnungsträges in eine Position auslösen, aus der sich die bevorstehende automatische Aufzeichnung lückenlos an die bereits vollzogenen automatischen Aufzeichnungen anschließt.

**Patentansprüche**

1. Verfahren zur automatischen Aufzeichnung von Fernsehprogrammen unter Verwendung eines Videoaufzeichnungsgerätes, das mit einem Fernsehempfangsteil, einer Zeitschalteinrichtung zur automatischen Einleitung der Aufzeichnung, einem Datenspeicher für die Einschaltzeiten und Programmarten und einen Signalgenerator zur Umwandlung von Daten in Videosignale ausgestattet ist, wobei

im Videoaufzeichnungsgerät ein Videotextdecoder eingebaut ist, der die in der Vertikalaustastlücke des empfangenen Fernsehsignals enthaltenen Programmdaten decodiert,

die decodierten Programmdaten über den im Videoaufzeichnungsgerät enthaltenen Signalgenerator in Videosignale umgewandelt werden, die auf einem angeschlossenen Fernsehempfänger wiedergegeben werden,

die im Rahmen einer Programmtafel auf dem Fernsehschirm dargestellten einzelnen Programmbeiträge zur Benutzerführung nacheinander durch eine erste elektro-optische Markierung angeboten werden, wobei die elektro-optische Markierung in manuell wählbarem oder vorgegebenem Zeitabstand von Programmbeitrag zu Programmbeitrag wandert und dabei in zeitlicher Fogle das interessierende Programm in Einzelpositionen anbietet,

durch Auslösung einer Speicherfunktion der durch die elektro-optische Markeirung angebotene Programmbeitrag mit allen für die automatische Aufzeichnung und die alphanumerische Darstellung notwendigen Daten im Speicher des Videorecorders abgelegt wird, und

nach Ablage des gewählten Programmbeitrags im Speicher des Videorecorders dem Benutzer die Speicherung quittiert wird, dadurch gekennzeichnet, daß

dem Benutzer die Speicherung des gewählten Programmbeitrags dadurch quittiert wird, daß der gewählte Programmbeitrag innerhalb der auf dem Fernsehbildschirm dargestellten Programmtafel mit eine zweiten elektro-optischen Markierung versehen wird, und

bei Überschreitung der verfügbaren Aufzeichungskapazität der eingelegten Aufzeichnungskassette die entsprechenden, kapazitätsüberschreitenden Programmbeiträge durch eine weiter elektro-optische Markierung bei der Darstellung auf dem Fernsehbildschirm hervorgehoben werden.

2. Verfahren nach Anspruch 1, dadurch gekennzeichnet, daß nach Abcluß de Auswahl der für die automatische Aufzeichnung ausgewählten Programmbeiträge diese in zeitlicher Reihenfolge auf dem Fernsehbildschirm aufgelistet werden.

3. Verfahren nach Anspruch 2, dadurch gekennzeichnet, daß die Auflistung der für die automatische Aufzeichnung ausgewählten Programmbeiträge elektro-optisch, beispielsweise durch Wahl einer anderen Schriftfarbe, unterschiedlich zu den ursprünglichen Videotext-Programmtafeln markiert wird.

4. Verfahren nach Anspruch 3, dadurch gekennzeichnet, daß die unterschiedliche Markierung de ausgewählten Programmbeiträge auch in die ursprünglichen Videotexttafeln übernommen wird, so daß bei deren Aufruf erkennbar ist, welche Programmbeiträge aus dem Gesamtprogramm für die automatische Aufzeichnung bereits ausgewählt wurden.

5. Verfahren nach Anspruch 2 und/oder 3, dadurch gekennzeichnet, daß bei zeitlicher Kollision der ausgewählten im Speicher abgelegten und auf dem Fernsehbildschirm aufgelisteten Programmbeiträge die kollidierenden Beiträge zeitlich wechselnd, beispielsweise durch Wechselblinken, elektro-optisch markiert werden und durch Auslösung eine Bestätigungsfunktion durch den Benutzer die Prioritäten für die Aufzeichnung der zeitlich kollidierenden Programmbeiträge gesetzt werden.

6. Verfahren nach einem oder mehreren der vorhergehenden Ansprüche, dadurch gekennzeichnet, daß auf dem Fernsehbildschirm angezeigt wird innerhalb welcher Zeitspanne oder nach welchem Programmbeitrag die Aufzeichnungskassette gewechselt werden muß.

7. Verfahren nach einem oder mehreren der vorhergehenden Ansprüche, dadurch gekennzeichnet, daß im Aufzeichnungsgerät ein elektro-optisches oder akustisches Signal erzeugt wird, das nach Maßgabe der für den Kassettenwechsel ermittelten Zeitspanne und/oder des aufgezeichneten Programmbeitrages die Notwendigkeit des Kassettenwechsels signalisiert.

8. Verfahren nach einem oder mehreren der vorhergehenden Ansprüche, dadurch gekennzeichnet, daß bei der automatischen Aufzeichnung de ausgewählten Programmbeiträge die im Vertikalaustastbereich des Videosignals enthaltenen Programmdaten mit aufgezeichnet werden und daß bei der Wiedergabe der Programmbeiträge der im Videoaufzeichnungsgerät eingebaute Videotextdecoder den Programmbeitrag nach Sendezeit und Titel identifiziert und beides über den Videosignalgenerator auf dem Fernsehbildschirm zu Beginn de Wiedergabe eingeblendet wird.

9. Verfahren nach einem oder mehreren der vorhegehenden Ansprüche, dadurch gekennzeichnet, daß bei Wiedergabebetrieb des Videoaufzeichnungsgerätes vor Abarbeitung de gespeicherten Aufzeichnungsbefehle nach Maßgabe der für die automatische Aufzeichnung noch gespeicherten Programmbeiträge, der Uhrzeit und/oder der abgefragten Programmkennungen in den empfangenen Fernsehsignalen bei einer kurzfristig bevorstehenden automatischen Aufzeichnung ein elektro-optisches und/oder akustisches Warnsignal im Videoaufzeichnungsgerät erzeugt wird, das auf die notwendige Umschaltung auf den automatischen Aufzeichnungsbetrieb hinweist.

10. Verfahren nach Anspruch 9, dadurch gekennzeichnet, daß das Warnsignal die Abschaltung des Wiedergabebetriebes, die Einschaltung des automatischen Aufzeichnungsbetriebes und einen Suchlauf für die Aufzeichnungskassette auslöst, derart, daß der Aufzeichnungsträger so positioniert wird, daß sich die bevorstehende automatische Aufzeichnung lückenlos an die bereits vollzogenen automatischen Aufzeichnungen anschließt.

## Revendications

1. Procédé pour l'enregistrement automatique de programmes de télévision moyennant l'utilisation d'un appareil d'enregistrement vidéo, qui est équipé d'une partie de réception de télévision, d'un dispositif formant minuterie servant à déclencher automatiquement l'enregistrement, une mémoire de donées pour les instants de branchement et des types de programmes et un générateur de signaux servant à convertir des données en signaux vidéo, et selon lequel

un décodeur de vidéotex, qui décode les données de programems contenues dans l'intervalle de suppression vertical du signal de télévision reçu, est incorporé dans l'appareil d'enregistrement vidéo,

les données décodées du programme sont converties, par l'intermédiaire d'un générateur de signaux contenu dans l'appareil d'enregistrement vidéo, en des signaux vidéo, qui sont reproduits sur un récepteur de télévision raccordé,

les parties individuelles du programme, qui sont représentées dans le cadre d'un tableau de programme sur l'écran de télévision, sont présentées successivement, pour servir de guide à l'utilisateur, au moyen d'un premier marquage électro-optique, le marquage électro-optique se déplaçant, pendant un intervalle de temps pouvant être sélectionné manuellement ou prédéterminé, d'une partie du programme à une autre et proposant selon une séquence temporelle le programme intéressant, dans des positions isolées,

grâce au déclenchement d'une fonction de mémoire, la partie du programme offerte par le marquage électro-optique est mémorisée, ainsi que toutes les données nécessaires pour l'enregistrement automatique et la représentation alphanumérique, dans la mémoire de l'enregistreur vidéo, et

après mémorisation de la partie du programme sélectionnée dans la mémoire de l'enregistreur vidéo, la mémorisation est signalée comme étant exécutée à l'utilisateur, caractérisé en ce que

l'utilisateur est informé de la mémorisation de la partie du programme sélectionnée par le fait que la partie du programme sélectionnée est pourvue d'un second marquage électro-optique, dans le tableau de programme représenté sur l'écran de télévision, et

lors du dépassement de la capacité d'enregistrements disponibles de la cassette d'enregistrement insérée, les parties du programme correspondantes, qui dépassent la capacité, sont mise en évidence par un autre marquage électro-optique, dans la représentation sur l'écran de télévision.

2. Procédé selon la revendication 1, caractérisé en ce qu'à la fin de la sélection des parties du programme sélectionnées pour l'enregistrement automatique, ces parties du programme sont reproduites sous la forme d'une liste selon une séquence temporelle sur l'écran de télévision.

3. Procédé selon la revendication 2, caractérisé en ce que la liste des parties du programme sélectionnées pour l'enregistrement automatique est marquée par voie électro-optique, par exemple grâce au choix d'une autro couleur d'inscription, différente de celle des tableaux initiaux de programmes de vidéotex.

4. Procédé selon la revendication 3, caractérisé en ce que le marquage différent des parties du programme sélectionées est également transféré dans les tableaux initiaux de vidéotex de sorte que, lors de leur rappel, on peut identifier les parties du programme qui ont déjà été sélectionnées, à partir de l'ensemble du programme, pour l'enregistrement automatique.

5. Procédé selon la revendication 2 et/ou 3, caractérisé en ce que, dans le cas d'une collision dans le temps entre les parties du programme sélectionnées, mémorisées sans a mémoire et recensées sous la forme d'une liste sur l'écran de télévision, les parties du programme en conflit sont marquées par voie électro-optique, d'une manière alternée dans le temps, par exemple au moyen d'un clignotement, et les priorités pour l'enregistrement des parties du programme qui sont en collision dans le temps sont fixées par l'utilisateur au moyen d'une fonction de confirmation.

6. Procédé selon une ou plusieurs des revendications précédentes, caractérisé en ce qu'on affiche sur l'écran de télévision, pendant quel intervalle de temps ou après quelle partie du programme la cassette d'enregistrement doit être changée.

7. Procédé selon une ou plusieurs des revendications précédentes, caractérisé en ce qu'un signal électro-optique ou acoustique est produit dans l'appareil d'enregistrement, ce signal indiquant la nécessité du remplacement de la cassette en fonction de l'intervalle de temps déterminé pour ce remplacement et/ou en fonction de la partie du programme enregistrèe.

8. Procédé selon une ou plusieurs des revendications précédentes, caractérisé en ce que, lors de l'enregistrement automatique des parties du programme sélectionnées, les données du programme contenant la zone de suppression verticale du signal vidéo sont enregistrés et que, lors de la reproduction des parties du programme, le décodeur de vidéotex incorporé dans l'appareil d'enregistrement vidéo identifie la partie du programme sur la base de l'instant d'émission et du titre et supprime ces deux données, par l'intermédiaire du générateur de signaux vidéo, sur l'écran de télévision, au début de la reproduction.

9. Procédé selon une ou plusieurs des revendications précédentes, caractérisé en ce que, lors de l'opération de reproduction exécutée par l'appareil d'enregistrement vidéo et avant l'élaboration des instructions d'enregistrement mémorisées, un signal d'avertissement électro-optique et/ou acoustique est produit dans l'appareil d'enregistrement vidéo, en fonction des parties du programme encore mémorisées pour l'enregistrement automatique, de l'heure et/ou des indicatifs de programme interrogés présents dans les signaux de télévision reçus, lors d'un enregistrement automatique imminent intervenant dans un bref délai, le signal indiquant la commutation nécessaire sur le mode d'enregistrement automatique.

10. Procédé selon la revendication 9, caractérisé en ce que le signal d'avertissement déclenche l'interruption de l'opération de reproduction, le branchement du mode d'enregistrement automatique et un cycle de recherche pour la cassette d'enregistrement, de sorte que le support d'enregistrement est positionné afin que l'enregistrement automatique imminent succède sans interruption aux enregistrements automatiques déjà exécutés.

**Claims**

1. Method for automatically recording television programmes using a video recording device which is equipped with a television receiving part, a timing device for automatically triggering recording, a data memory for the switch-on times and programme types and a signal generator for converting data into video signals,

a broadcast videotex decoder being installed in the video recording device, said decoder decoding the programme data contained in the vertical blanking interval of the received television signal,

the decoded programme data being converted into video signals via the signal generator contained in the video recording device, said video signals being played back on a television receiver connected to said video recording device,

the individual programme contributions represented in the scope of a programme table on the television screen for the purpose of user guidance are presented successively by a first electro-optical marker, the electro-optical marker moving at manually selectable or predetermined time intervals from programme contribution to programme contribution and in this respect presenting in chronological sequence the programme of interest in chronological sequence the programme of interest in individual positions,

by triggering a memory function, the programme contribution presented by the electro-optical marker being stored with all the data necessary for the automatic recording and the alphanumeric representation in the memory of the video recorder, and

after storage of the selected programme contribution in the memory of the video recorder, the storage being acknowledged to the user, characterized in that

the storage of the selected programme contribution is acknowledged to the user by means of the fact that the selected programme contribution within the programme table represented on the television screen is provided with a second electro-optical marker, and

when the available recording capacity of the inserted recording cassette is exceeded, the corresponding programme contributions exceeding the capacity are highlighted by a further electro-optical marker with the representation on the television screen.

2. Method according to Claim 1, characterized in that after termination of the selection of the programme contributions selected for automatic recording, said programme contributions are listed in chronological sequence on the television screen.

3. Method according to Claim 2, characterized in that the listing of the programme contributions selected for automatic recording is marked electro-optically differently from the original broadcast videotex programme tables, for example by selecting a different coloured script.

4. Method according to Claim 3, characterized in that the different marker of the selected programme contributions is also carried over into the original broadcast videotex tables so that on calling them up it can be detected which programme contributions have already been selected for automatic recording from the entire programme.

5. Method according to Claim 2 and/or 3, characterized in that in the case of a clash in timing of the selected programme contributions stored in the memory and listed on the television screen the clashing contributions are electro-optically marked in a chronologically alternating manner, for example by means of alternate flashing, and by the triggering of a confirmation function by the user the priorities for the recording of the programme contributions which clash in timing are set.

6. Method according to one or more of the preceding claims, characterized in that it is displayed on the television screen within which time span or after which programme contribution the recording cassette must be changed.

7. Method according to one or more of the preceding claims, characterized in that an electro-optical or acoustic signal is generated in the recording device, said signal signalling the necessity for a change of cassette in accordance with the time span determined for the cassette change and/or of the recorded programme contribution.

8. Method according to one or more of the preceding claims, characterized in that during the automatic recording of the selected programme contributions the programme data contained in the vertical blanking region of the video signal are also recorded, and in that during the playback of the programme contributions the broadcast videotex decoder installed in the video playback device identifies the programme contribution according to transmission time and title and both are faded into the television screen via the video signal generator at the beginning of the playback.

9. Method according to one or more of the preceding claims, characterized in that, in the playback mode of the video recording device before processing of the stored recording instructions in accordance with the programme contributions still stored for automatic recording, the time and/or the interrogated programme identifications in the received television signals, when an automatic recording is directly imminent, an electro-optical and/or acoustic warning signal is generated in the video recording device, said signal indicating the necessary switch-over to the automatic recording mode.

10. Method according to Claim 9, characterized in that the warning signal triggers the switching off of the playback mode, the switching on of the automatic recording mode and a search run for the recording cassette in such a way that the recording medium is positioned such that the imminent automatic recording is joined on without an interval to the automatic recordings already completed.